# EUROPEAN PATENT SPECIFICATION

(11) **EP 3 150 877 B1**
(45) Date of publication and mention of the grant of the patent: **08.04.2020**
(21) Application number: 16191486.6
(22) Date of filing: 29.09.2016
(51) Int. Cl.: F16D 28/00, F16D 23/12

(54) **CLUTCH ACTUATOR OF A MOTOR VEHICLE AND RELATED MOTOR VEHICLE**
KUPPLUNGSAKTUATOR EINES KRAFTFAHRZEUGS UND ZUGEHÖRIGES KRAFTFAHRZEUG
ACTIONNEUR D'EMBRAYAGE D'UN VÉHICULE AUTOMOBILE ET VÉHICULE AUTOMOBILE ASSOCIÉ

(30) Priority: 30.09.2015 IT UB20154031
(43) Date of publication of application: 05.04.2017
(73) Proprietor: Freni Brembo S.p.A., 24035 Curno (Bergamo) (IT)
(72) Inventor: ARIENTI, Roberto, I-24035 Curno, BERGAMO (IT); COMENDULI, Alberto, I-24035 Curno, BERGAMO (IT); CANTONI, Carlo, I-24035 Curno, BERGAMO (IT)
(74) Representative: Mitola, Marco

(56) References cited:
- EP-A2- 1 803 957
- WO-A1-91/06414
- DE-A1-102014 207 080
- GB-A- 2 347 723
- US-A1- 2014 138 207

## Description

### FIELD OF APPLICATION

This invention relates to a clutch actuator of a motor vehicle and a related motor vehicle.

### STATE OF THE ART

In particular, in the automotive field, electronically controlled servo-actuator systems are becoming increasingly popular for optimising the operation of some vehicle systems, such as for example the braking system, gearbox, etc.

These servo-actuated systems are increasingly replacing more traditional, manually operated, hydraulic systems, which involve several problems and limitations.

In fact, the presence of hydraulic systems for the actuation of vehicle components imposes the presence of pipes and related fluid reservoirs, as well as the need to periodically drain the system.

Obviously, hydraulic systems involve risks due to leaks and oozing, require accurate maintenance of the related gasket seals, periodic replacement of the working liquid that is characterised by a marked hygroscopicity and can be subject to phenomena of fading for example due to overheating.

Furthermore, hydraulic devices require a manual type actuation, by lever or pedal, which is inevitably linked to the strength of the driver. This involves for example the need to over-dimension some system components, such as the diameters of the discs of a clutch pack, or even the diameter of a brake disc, so that the devices can be actuated effectively without requiring excessive manual effort from the user.

However, this increases the masses of system components and the related gyroscopic effects, for example of clutch discs or brake discs, which increase inertia and worsen the dynamic behaviour of the vehicle.

Moreover, manual actuation of a hydraulic device is subject to the sensitivity of the user who feels the stiffness of the actuation lever or pedal and adjusts the actuation force accordingly. Often systems are subject to variations of stiffness for example due to variations of the hydraulic fluid caused by temperature, the presence of micro-bubbles, the pliability of hydraulic hoses and so on. Therefore the actuation force that the user must impart to the actuating member, whether a lever or pedal, can vary over time to achieve the same final technical effect. The user is not able to adapt the actuation force to the changed system conditions and thus is not always able to obtain maximum performance from the system.

In the case of a clutch, for example, extreme sensitivity is required to determine the correct insertion, in order to effectively transmit torque to the wheels, especially when starting. If one thinks of motor vehicle racing and, for example, motorcycles, an incorrect clutch release, for example when starting, can kill the engine or spin the drive wheel (or drive wheels), with consequent loss of numerous positions.

Also, as seen, in racing such servo-actuator systems must allow obtaining maximum dynamic performance, while ensuring reduced bulk and weight. In the field of motor racing, whether with cars or motorcycles, these requirements of lightness and reduced bulk are even more urgent since the spaces available are themselves reduced, as well as the masses of the vehicles, for which the weight of vehicle's actuator devices is a not negligible percentage.

Hydraulic actuation systems do not always allow an adequate reduction of bulk and weight. Such solutions are known from DE 10 2014 207 080 A1 and WO 91/06414 A1.

### PRESENTATION OF THE INVENTION

Therefore, there is a need to solve the drawbacks and limitations mentioned in reference to the prior art.

This need is met by a clutch actuator of a motor vehicle according to claim 1.

In particular, this requirement is satisfied by a motor vehicle clutch actuator comprising an actuation command of the clutch actuator, configured to be actuated by a user, and an actuator body that at least partially houses a pusher configured to be operatively connected to a clutch to determine its engagement and disengagement, the pusher translating along an actuation direction, motor means suitable to move said pusher and operatively connected to the actuation command to be actuated by the latter, and transmission means that mechanically connect the motor means to the pusher, wherein the motor means are arranged parallel to the transmission means along a direction of transmission perpendicular to said actuation direction, wherein the motor means are arranged parallel to the transmission means in a transmission direction (X-X) perpendicular to said actuation direction (S-S),characterised in that the transmission means comprise a ball bearing screw mechanism, fitted with a ball bearing screw mechanically connected to the motor means, and a nut which meshes coaxially with said ball bearing screw, said nut being operatively connected to the pusher in order to move the pusher in the actuation direction (S-S).

According to a possible example not being part of the invention, the motor means are placed coaxially to the transmission means in a direction of transmission perpendicular to said actuation direction.

According to a possible example not being part of the invention, the actuation command comprises a lever and/or pedal and/or a button operable manually by a user to operate said motor means, or automatically operable.

According to a possible example not being part of the invention, the actuator body comprises a cylinder, directed in the actuation direction, which houses and guides the movement of the pusher in the same actuation direction.

According to a possible example not being part of the invention, the transmission means provide for an alternating rectilinear motion mechanism which comprises a cam, integral in rotation with an output shaft of the epicycloidal step-down gear, parallel to the direction of transmission, wherein a piston, which acts as a pusher, is directly hinged to said cam.

According to a possible example not being part of the invention, a motor shaft of the motor means is coaxial and integral in rotation with said output shaft of the epicycloidal step-down gear.

According to a possible example not being part of the invention, the epicycloidal step-down gear is configured so as to achieve a reduction of the speed between a motor shaft of the motor means and an output shaft of the epicycloidal step-down gear in order to reduce the angular velocity and therefore increase the torque in the transmission from the motor means to the output shaft.

According to a possible example not being part of the invention, the actuator body comprises a single body directed parallel to the direction of transmission, which houses, arranged in series, the motor means and the epicycloidal step-down gear, and a lateral appendage, directed parallel to the actuation direction, which houses the mechanism comprising the connecting rod and the crank as well as the pusher.

According to the invention the transmission means comprise a ball bearing screw mechanism, fitted with a ball bearing screw mechanically connected to the motor means, and a nut, which meshes coaxially with said ball bearing screw, said nut being operatively connected to the pusher in order to move the pusher in the actuation direction.

According to a possible embodiment, the nut is integral with a wedge, which moves parallel to the direction of transmission, the wedge intercepting a counter-shaped wall of the pusher in order to move the pusher in the actuation direction.

According to a possible embodiment, between the wedge and the pusher a ball bearing is inserted, so as to achieve a rolling friction at the interface between the wedge and the pusher.

According to a possible embodiment, the actuator body comprises an attachment plate to a casing of the clutch group, configured to allow the direct attachment of the clutch actuator to said clutch group.

According to a possible embodiment, the clutch actuator comprises a control unit programmed to control the motor means in the actuation of the pusher and operatively connected to the manual actuation device.

According to a possible embodiment, the control unit is programmed to receive an on-off type actuation request from the user via said actuation command, and to modulate the speed and/or movement of the pusher as a function of a pre-imposed actuation rule.

According to a possible example not being part of the invention, the control unit is programmed so as to automatically actuate the pusher to disengage the clutch, disconnecting at least partially an input shaft from an output shaft of the clutch, in case of locking, when downshifting, of one or more wheels of the motor vehicle kinematically connected to said output shaft.

According to a possible example not being part of the invention, the control unit is programmed so as to automatically actuate the pusher to disengage the clutch, disconnecting at least partially an input shaft from an output shaft of the clutch, in case of spinning, when accelerating, of one or more wheels of the motor vehicle kinematically connected to said output shaft.

According to a possible example not being part of the invention, said control unit is operatively connected to a controller of an associable vehicle, the control unit being programmed so as to cooperate with the controller in changing gear and/or the dynamic control of the vehicle.

### DESCRIPTION OF THE DRAWINGS

Further characteristics and advantages of this invention will be more understandable from the following description of its preferred and non-limiting examples of embodiments, in which:

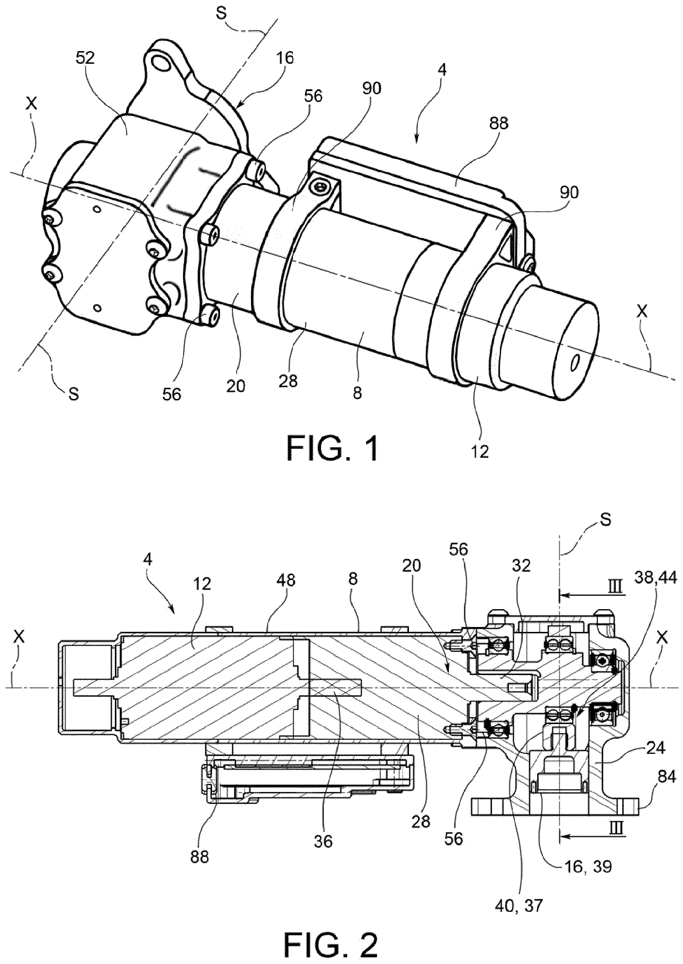

Figure 1 is a perspective view of a clutch actuator of a motor vehicle;
Figure 2 is a sectional view of the clutch actuator of Figure 1;

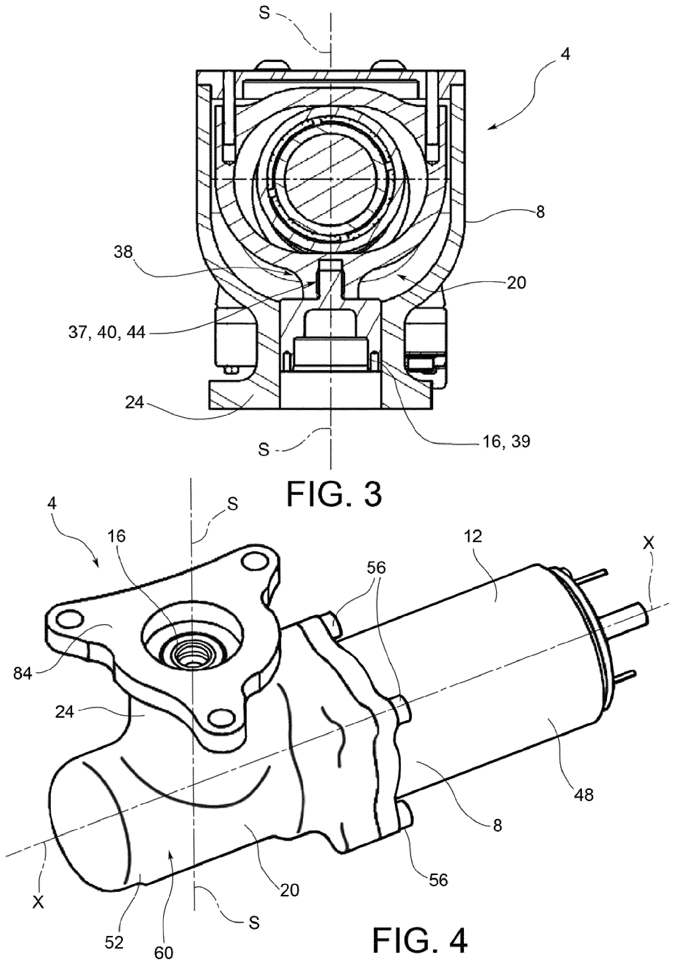

Figure 3 is a sectional view of the clutch actuator of Figure 1, along the section plane III-III of Figure 2;
Figure 4 is a perspective view of a clutch actuator of a motor vehicle according to this invention;

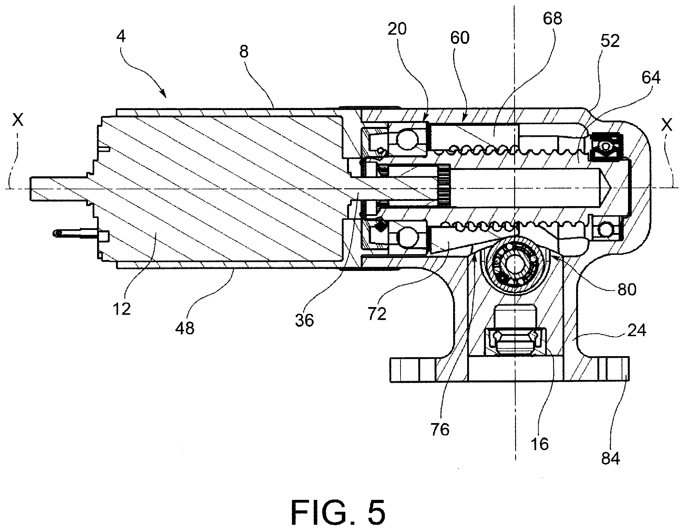

Figure 5 is a sectional view of the clutch actuator of Figure 4.

The elements, or parts of elements, in common between the embodiments described below will be indicated with the same reference numbers.

### DETAILED DESCRIPTION

With reference to the above figures, reference number 4 generally designates a clutch actuator of a motor vehicle comprising an actuation command (not shown) of the clutch actuator, configured to be operated by a user, and an actuator body 8. Motor vehicle means any motor vehicle having at least two wheels, such as for example a motorcycle, a tricycle, having two front or rear wheels, a quadricycle and any motor vehicle having two or more axles, regardless of the type of drive, size and power.

It should be noted that the actuation command can comprise a lever and/or a pedal and/or a button manually operable by a user to actuate the clutch actuator 4 and, as better described below, motor means 12 of the clutch actuator 4. Said actuation command can also be actuated automatically, for example by a control unit of the motor vehicle.

Therefore, the actuation command can be manual, manually operable on request by the user (by moving a lever or a pedal or by pressing a button) or it can be automatic. Automatic actuation command means that the actuation of the clutch actuator, for example to change gear or perform a stability control of the vehicle, can occur even without the "manual" action of the user, i.e., the actuator can be actuated spontaneously as a function of the operating parameters of the vehicle on which it is applied, as better specified in the rest of the description.

Preferably, the user, by actuating the actuation command, selectively requests the actuation of the clutch actuator 4.

The actuator body 8 houses at least partially a pusher 16 configured to be operatively connected to a clutch (not shown) to determine its engagement and disengagement. For example, the pusher can be kinematically connected to the clutch or its actuating member by means of the interposition of a rod or return (not shown).

Engagement of the clutch means that the input shaft and the output shaft of the clutch, connected respectively to the motor shaft and the primary shaft of the gearbox, are integrally connected in rotation to each other so as to enable the transmission of torque from the motor shaft to the gearbox and therefore to the drive wheel(s). The connection between said shafts occurs typically by means of discs axially facing each other and provided with friction facings, in a known manner.

Disengagement of the clutch means that the input shaft and the output shaft of the clutch are connected in rotation with each other in such a way as not to enable the transmission of torque from the motor shaft to the gearbox and therefore to the drive wheel(s).

The pusher 16 is configured to translate along an actuation direction S-S.

The pusher 16 can in turn be connected kinematically to the clutch through returns or mechanical connection of any kind.

In addition, the actuator body 8 houses the motor means 12 suitable to move said pusher 16 and operatively connected to the actuation command thereof to be actuated by the latter.

The motor means 12 preferably comprise an electric motor.

The actuator body 8 also houses transmission means 20 which mechanically connect the motor means 12 to the pusher 16.

Advantageously, the motor means 12 are arranged parallel to the transmission means 20 in a transmission direction X-X perpendicular to said actuation direction S-S.
wherein the motor means (12) are arranged parallel to the transmission means (20) in a direction of transmission (X-X) perpendicular to said actuation direction(S-S.

According to example not being part of the invention, the actuator body 8 comprises a cylinder 24, directed in the actuation direction S-S, which houses and guides the movement of the pusher 16 in said actuation direction S-S. The cylinder is at least partially counter-shaped with respect to the pusher in order to guide the rectilinear movement parallel to the actuation direction S-S.

According to an example not being part of the invention, the transmission means 20 comprise an epicycloidal step-down gear 28 mounted coaxially to the direction of transmission X-X.

The epicycloidal step-down gear 28 comprises a plurality of gears and an output shaft 32 which is preferably coaxial and integral in rotation to a motor shaft 36 of the motor means 12.

According to an example not being part of the invention, the transmission means 20 comprise an alternating rectilinear motion mechanism 38 which comprises a connecting rod 40 and a crank 44 which lie on a plane perpendicular to the direction of transmission X-X, wherein the connecting rod 40 is doubly hinged to the pusher 16 and to the crank 44, and wherein the crank 44 is integral in rotation with the output shaft 32 of the epicycloidal step-down gear 28 parallel to the direction of transmission X-X.

Therefore, the connecting rod 40 and the crank 44 revolve around a rotation axis parallel to the direction of transmission X-X and the pusher 16 translates, according to a reciprocating rectilinear motion, along a direction parallel to the actuation direction S-S. Therefore, the rotation motion of the motor shaft 36 of the motor means 12 around the direction of transmission X-X is transformed, thanks to the mechanism with connecting rod 40 and crank 44, into reciprocating rectilinear motion of the pusher 16 along the actuation direction S-S, perpendicular to said direction of transmission.

According to an example not being part of the invention, the transmission means 20 provide for an alternating rectilinear motion mechanism 38 which comprises a cam 37, integral in rotation with the motor shaft 36 to which a piston 39 which acts as a pusher 16 is directly hinged.

This means that, as a function of the rotation of the crank 44 or of the cam 37, the pusher 16 or piston 39 will have a different actuation stroke; also as a function of such rotation, the stroke can be cancelled and its direction be reversed.

It should be noted that the actuation of the pusher 16 or piston 39 can provide for the opposite rotation of the motor means 12 so as to rotate the motor shaft 36 of the motor means 12 in one direction or in the opposite direction as a function of the need to realise the engagement or disengagement of the clutch.

It is also possible to provide for an actuation of the motor shaft 36 of the motor means 12 always in the same direction of rotation: in this way, every half turn, i.e., rotation of 180 degrees, will pass to the actuation extremes of the stroke of the pusher 16, i.e., to the upper and lower dead points of the pusher as a function of the need to have engagement and disengagement conditions of the clutch.

Moreover, the kinematic law that connects the translation motion of the pusher 16 with the rotation motion of the motor shaft 36 is not linear, as is known, but rather sinusoidal. Obviously, even the kinematic law between the respective linear (of translation) and angular (rotational) velocities of, respectively, the pusher 16 and the motor shaft 36, are not linear.

The epicycloidal step-down gear 28 has the advantage of allowing a substantial reduction of the speed between the motor shaft 36 and the output shaft 32, while maintaining the extremely limited overall dimensions, so as to increase the torque of the motor means 12 and effectively actuate the pusher 16. In other words, the epicycloidal step-down gear 28 is configured so as to reduce the angular velocity and thus increase the torque in the transmission from the motor means 12 to the output shaft 32.

For example, the actuator body 8 is a cylindrical body coaxial and parallel to the direction of transmission X-X which houses, arranged in series with each other, the motor means 12, the epicycloidal step-down gear 28 and the mechanism comprising the connecting rod 40 and the crank 44.

Preferably, the actuator body 8 is a cylindrical body axisymmetric with respect to the direction of transmission X-X.

Preferably, the actuator body 8 comprises a single body 48 directed parallel to the direction of transmission which houses, arranged in series, the motor means 12, the epicycloidal step-down gear 28, and a lateral appendage 52, directed parallel to the actuation direction S-S, which houses the mechanism comprising the connecting rod 40 and the crank 44 as well as the pusher 16.

The single body 48 and the lateral appendage 52 can be secured to each other by threaded connection means 56 so as to allow a quick assembly/disassembly of the clutch actuator 4.

According to the invention, the transmission means 20 comprise a ball bearing screw mechanism 60, fitted with a ball bearing screw 64 mechanically connected to the motor means 12, and a nut 68 which meshes coaxially with said ball bearing screw 64, in which the nut 68 is operatively connected to the pusher 16 in order to move the pusher 16 in the actuation direction S-S.

For example, the nut 68 is integral with a wedge 72 which moves parallel to the direction of transmission X-X, the wedge 72 intercepting a counter-shaped wall 76 of the pusher 16 in order to move the pusher 16 in the actuation direction S-S.

Therefore, the ball bearing screw mechanism 60 allows transforming the rotation motion of the motor shaft 36 of the motor means 12 and the rotation motion of the ball bearing screw 64 around the actuation direction X-X into translational motion of the nut 68 parallel to the same actuation direction X-X. The wedge 72 in turn transforms the translation motion of the nut 68 parallel to the actuation direction X-X into translational motion of the pusher along the actuation direction S-S.

According to an embodiment, between the wedge 72 and the counter-shaped wall 76, an action of thrust and friction is exerted that is transformed into actuation stroke of the pusher 16.

The transition between a forward stroke and a return stroke of the pusher can be obtained by reversing the rotation of the motor means: in fact, this reversal of rotation results in the reversal of the direction of translation of the nut along the direction of transmission, and thus the reversal of the actuation stroke of the pusher along the actuation direction S-S.

Preferably, between the wedge 72 and the pusher 16 a ball bearing 80 is inserted, so as to achieve a rolling, and no longer sliding, friction at the interface between the wedge 72 and the pusher 16.

For example, the actuator body 8 comprises a single body 48 directed parallel to the direction of transmission which houses, arranged in series, the motor means 12 and a lateral appendage 52, directed parallel to the actuation direction S-S, which houses the ball bearing screw mechanism 60 and the pusher 16.

The single body 48 and the lateral appendage 52 can be secured to each other by threaded connection means 56 so as to allow a quick assembly/disassembly of the clutch actuator 4.

Preferably, the actuator body comprises an attachment plate 84 to a casing of a clutch group, configured to allow the direct attachment of the clutch actuator 4 on said clutch group.

According to an embodiment, the clutch actuator 4 comprises a control unit 88 programmed to control the motor means 12 in the actuation of the pusher 16 and operatively connected to the manual actuation device.

Preferably, the control unit 88 is directly fixed to the actuator body 8, for example by means of suitable fixing clamps 90.

The control unit 88 can be programmed to receive an on-off type actuation request from the user via said actuation command, and to modulate the speed and/or movement of the pusher as a function of a pre-imposed actuation rule.

As seen, the actuation request by the user can occur by pressing a button or also by moving a lever and/or a pedal.

In other words, through the manual actuation of the actuation command, the user simply requests the actuation of the clutch actuator 4, without however modulating the timing and/or the intervention logic, which are instead determined by appropriate mappings stored in said control unit 88.

In this way, the clutch actuator is able to ensure the best possible traction, for example as a function of various vehicle operating parameters.

The above examples relate to examples of manual actuation commands of the actuator 4, in which the user selectively decides whether or not to actuate the clutch actuator 4 at will even though, as seen, the user does not modulate its actual operation, i.e., determining the intervention rule over time.

It is also possible, as seen, to provide for an automatic actuation command, in which the control unit 88 decides the intervention of the clutch actuator 4 automatically, i.e., regardless of the user's will. There can be multiple examples of this automatic operation.

For example, the control unit 88 is programmed so as to automatically actuate the pusher 16 to disengage the clutch, disconnecting at least partially an input shaft from an output shaft of the clutch, in case of locking, when downshifting, of one or more wheels of the motor vehicle kinematically connected to said output shaft of the clutch. For example, in case of locking of one or more drive wheels, kinematically connected to the output shaft of the clutch (i.e., to the primary gearbox shaft) due to excessive reverse torque transmitted from the vehicle engine during downshifting, the control unit 88 automatically disengages the clutch, by acting appropriately on the pusher 16, so as to restore the rolling of the wheel(s).

In this way, the control unit 88 acts as a slipper device, without requiring any modification to the clutch, as in known solutions that are complex and heavy.

This actuation of the control unit 88 occurs independently of the will of the user, and indeed occurs precisely to correct a user's dangerous manoeuvre such as for example downshifting to an excessive rotation regime in relation to the gear engaged, the rolling of the motor vehicle, the inclination of the motorcycle and/or the traction conditions of the road surface. This achieves an active control of the dynamic stability of the vehicle.

According to a further embodiment, the control unit 88 is programmed so as to automatically actuate the pusher 16 to disengage the clutch, disconnecting at least partially an input shaft from an output shaft of the clutch, in case of spinning when accelerating, of one or more wheels of the motor vehicle kinematically connected to said output shaft.

Also in this case, such actuation of the control unit 88 occurs independently of the will of the user, and indeed occurs precisely to correct a user's dangerous manoeuvre such as for example an excessive request for power in relation to the gear engaged, the rolling of the motor vehicle, the inclination of the motorcycle and/or the traction conditions of the road surface.

According to a further embodiment, the control unit 88 is programmed so as to automatically actuate the pusher 16 to disengage the clutch, disconnecting at least partially an input shaft from an output shaft of the clutch to perform an automatic gear change or a robotised manual change (AMT): this can occur according to mappings stored in the control unit, for example as a function of the forward speed and/or torque delivered and/or the gear engaged, and/or the angle of inclination of the motor vehicle.

It is obvious that such automatic intervention can take place efficiently after integration and connection of the control unit 88 of the clutch actuator 4 with further controllers of the motor vehicle that control and manage its dynamics.

For example, said control unit 88 is operatively connected to a controller of an associable vehicle, and the control unit is programmed so as to cooperate with the controller in changing gear and/or the dynamic control of the vehicle.

Such cooperation is useful in order to integrate the overall management of the stability control of the motor vehicle, which can also provide for interaction with auxiliary devices such as anti-lock braking devices and strategies for managing the power delivered by the engine, as well as the gear shift actuator devices.

As can be appreciated from the description, this invention allows overcoming the drawbacks presented in the prior art.

The clutch actuator of this invention allows obtaining the direct actuation of the clutch without the use of a hydraulic system and can be installed, for example, on a racing motorcycle.

In particular, the actuator device allows reducing bulk and masses with respect to a conventional hydraulic system.

In addition, this invention allows the possibility of introducing a direct electrical actuation system of the clutch which introduces advantages in terms of modulation of the clutch when starting, reduction of masses and greater speed in the gear change.

With the proposed systems and the direct actuation of the clutch mechanism, the hydraulic part is no longer needed and can be removed and replaced by a simple button for managing starting and changes. In addition, the servo-mechanism of this invention can generate forces greater than those obtained with conventional hydraulic systems since no longer connected to the direct actuation of the driver and thus his strength. In this way it is possible to dimension the clutch pack differently, reducing its dimensions, weight (for example using carbon plates instead of the classic sintered) and rotational inertia, while maintaining performance unaltered.

In other words, thanks to the fact that the actuator is able to exert a thrust on the clutch pack that is much greater than that applicable by manual actuation, it is possible to use alternative materials for the clutch discs which, if on the one hand in fact they require a high packing force, on the other they ensure a considerable reduction of the masses and gyroscopic effects.

Moreover, the actuator according to the invention allows automatically adapting to possible variations of operation of the components to be actuated; for example, it is able to automatically compensate for wear of the clutch discs without requiring any particular adaptation or sensitivity from the user.

In addition the solution of this invention can replace complicated mechanical systems present in the clutch to control so-called reverse torque and function as a "slipper" device in downshifting for the rear wheel: in this way the same clutch can be simplified and lightened, while also reducing the gyroscopic effect on the vehicle. The slipper clutch effect may be obtained automatically, by at least partially opening the clutch, i.e., if necessary disengaging the motor shaft from the primary shaft of the gearbox in the event of incipient locking of one or more rear wheels of the motor vehicle, for example during a phase of downshifting and/or sudden release of the throttle control during which the reverse torque supplied by the engine can generate locking phenomena in the drive tyres.

Advantageously, the actuator device of this invention is configured so that it can be replaced with a conventional manual actuator without requiring any modification to the clutch and/or engine group of the vehicle on which it is applied. Therefore, the actuator of this invention can be advantageously applied as a retro-fit to motor vehicles previously equipped with the manual clutch actuator devices without requiring additional changes. This possibility is ensured by the fact that the actuator device, as seen, is particularly compact and lightweight, while still being able to ensure the proper action of the clutch of the motor vehicle in any operating condition and, indeed, with greater efficiency and better performance with respect to a manual type actuation.

A person skilled in the art, in order to satisfy contingent and specific needs, may make numerous modifications and variations to the clutch actuator devices described above, all however contained within the scope of the invention as defined by the following claims.

## Claims

1. Clutch actuator (4) of a motor vehicle comprising an actuation command of the clutch actuator (4) and an actuator body (8) housing at least partially
- a pusher (16) configured to be operatively connected to a clutch to determine its engagement and disengagement, the pusher (16) moving in an actuation direction (S-S),
- motor means (12) suitable to move said pusher (16) and operatively connected to the actuation command thereof to be operated by the latter,
- transmission means (20) which mechanically connect the motor means (12) to the pusher (16),
- wherein the motor means (12) are arranged parallel to the transmission means (20) in a transmission direction (X-X) perpendicular to said actuation direction(S-S),
**characterised in that** the transmission means (20) comprise a ball bearing screw mechanism (60), fitted with a ball bearing screw (64) mechanically connected to the motor means (12), and a nut (68) which meshes coaxially with said ball bearing screw (64), said nut (68) being operatively connected to the pusher (16) in order to move the pusher (16) in the actuation direction (S-S).

2. Clutch actuator (4) of a motor vehicle according to claim 1, wherein the nut (68) is integral with a wedge (72) which moves parallel to the direction of transmission (X-X), the wedge (72) intercepting a counter-shaped wall (76) of the pusher (16) in order to move the pusher (16) in the actuation direction (S-S).

3. Clutch actuator (4) of a motor vehicle according to claim 2, wherein between the wedge (72) and the pusher (16) a ball bearing (80) is inserted, so as to achieve a rolling friction at the interface between the wedge (72) and the pusher (16).

4. Clutch actuator (4) of a motor vehicle according to any of the preceding claims, wherein the actuator body (8) comprises an attachment plate (84) to a casing of the clutch group, configured to allow the direct attachment of the clutch actuator (4) to said clutch group.

5. Clutch actuator (4) of a motor vehicle according to any of the preceding claims wherein the clutch actuator (4) comprises a control unit (88) programmed to control the motor means (12) in the actuation of the pusher (16) and operatively connected to the manual actuation device.

6. Clutch actuator (4) of a motor vehicle according to claim 5, wherein the control unit (88) is programmed to receive an on-off type actuation request from the user via said actuation command, and to modulate the speed and/or movement of the pusher (16) as a function of a pre-imposed actuation rule.

7. Motor vehicle comprising a clutch actuator (4) according to any of the preceding claims.

## Patentansprüche

1. Kupplungsaktuator (4) eines Kraftfahrzeugs mit einem Betätiger des Kupplungsaktuators (4) und einem Aktuatorkörper (8), der zumindest teilweise Folgendes aufnimmt:
- einen Stößel (16), der so konfiguriert ist, dass er operativ mit einer Kupplung verbunden werden kann, um deren Ein- und Auskuppeln zu bestimmen, wobei sich der Stößel (16) in einer Betätigungsrichtung (S-S) bewegt,
- eine Motoreinrichtung (12), die geeignet ist, den Stößel (16) zu bewegen und mit dem Betätiger desselben wirkverbunden ist, um von diesem betätigt zu werden,
- Übertragungsmittel (20), die die Motormittel (12) mechanisch mit dem Stößel(16) verbinden,
- wobei die Motormittel (12) parallel zu den Übertragungsmitteln (20) in einer Übertragungsrichtung (X-X) senkrecht zu der Betätigungsrichtung (S-S) angeordnet sind, **dadurch gekennzeichnet, dass** die Übertragungsmittel (20) einen Kugelumlaufspindelmechanismus (60), der mit einer mechanisch mit den Motormitteln (12) verbundenen Kugelumlaufspindel (64) ausgestattet ist, und eine Mutter (68) umfassen, die koaxial mit der Kugelumlaufspindel (64) kämmt, wobei die Mutter (68) mit dem Stößel (16) in Wirkverbindung steht, um den Stößel (16) in Betätigungsrichtung (S-S) zu bewegen.

2. Kupplungsaktuator (4) eines Kraftfahrzeugs nach Anspruch 1, wobei die Mutter (68) integral mit einem Keil (72) ausgebildet ist, der sich parallel zur Übertragungsrichtung (X-X) bewegt, wobei der Keil (72) auf eine gegenläufige Wand (76) des Stößels (16) auftrifft, um den Stößel (16) in Betätigungsrichtung (S-S) zu bewegen.

3. Kupplungsaktuator (4) eines Kraftfahrzeugs nach Anspruch 2, wobei zwischen dem Keil (72) und dem Stößel (16) ein Kugellager (80) eingesetzt ist, um eine Rollreibung an der Schnittstelle zwischen dem Keil (72) und dem Stößel (16) zu erreichen.

4. Kupplungsaktuator (4) eines Kraftfahrzeugs nach einem der vorstehenden Ansprüche, wobei der Aktuatorkörper (8) eine Befestigungsplatte (84) an einem Gehäuse der Kupplungsgruppe umfasst, die so konfiguriert ist, dass sie die direkte Befestigung des Kupplungsaktuators (4) an der genannten Kupplungsgruppe ermöglicht.

5. Kupplungsaktuator (4) eines Kraftfahrzeugs nach einem der vorstehenden Ansprüche, wobei der Kupplungsaktuator (4) eine Steuereinheit (88) umfasst, die programmiert ist, um die Motormittel (12) bei der Betätigung des Stößels (16) zu steuern, und die mit der manuellen Betätigungsvorrichtung wirkverbunden ist.

6. Kupplungsaktuator (4) eines Kraftfahrzeugs nach Anspruch 5, wobei die Steuereinheit (88) so programmiert ist, dass sie eine Betätigungsanforderung vom Ein-Aus-Typ vom Benutzer über den genannten Betätiger empfängt und die Geschwindigkeit und/oder die Bewegung des Stößels (16) in Abhängigkeit von einer vorgegebenen Betätigungsvorschrift moduliert.

7. Kraftfahrzeug mit einem Kupplungsaktuator (4) gemäß einem der vorstehenden Ansprüche.

## Revendications

1. Actionneur d'embrayage (4) d'un véhicule automobile comprenant une commande d'actionnement de l'actionneur d'embrayage (4) et un corps d'actionneur (8) logeant au moins partiellement
- un poussoir (16) configuré pour être relié de manière fonctionnelle à un embrayage pour déterminer sa mise en prise et sa désolidarisation, le poussoir (16) se déplaçant dans une direction d'actionnement (S-S),
- des moyens moteurs (12) appropriés pour déplacer ledit poussoir (16) et reliés de manière fonctionnelle à la commande d'actionnement de celui-ci pour être actionnée par ce dernier,
- des moyens de transmission (20) qui relient de manière mécanique les moyens moteurs (12) au poussoir (16),
- dans lequel les moyens moteurs (12) sont agencés parallèlement aux moyens de transmission (20) dans une direction de transmission (X-X) perpendiculaire à ladite direction d'actionnement (S-S),
**caractérisé en ce que** les moyens de transmission (20) comprennent un mécanisme de vis à roulement à billes (60), équipé d'une vis à roulement à billes (64) reliée de manière mécanique aux moyens moteurs (12), et un écrou (68) qui s'engrène de manière coaxiale avec ladite vis à roulement à billes (64), ledit écrou (68) étant relié de manière fonctionnelle au poussoir (16) afin de déplacer le poussoir (16) dans la direction d'actionnement (S-S).

2. Actionneur d'embrayage (4) d'un véhicule automobile selon la revendication 1, dans lequel l'écrou (68) est solidaire d'une cale (72) qui se déplace parallèlement à la direction de transmission (X-X), la cale (72) interceptant une paroi de forme complémentaire (76) du poussoir (16) afin de déplacer le poussoir (16) dans la direction d'actionnement (S-S).

3. Actionneur d'embrayage (4) d'un véhicule automobile selon la revendication 2, dans lequel entre la cale (72) et le poussoir (16) un roulement à billes (80) est inséré, de manière à obtenir un frottement par roulement à l'interface entre la cale (72) et le poussoir (16).

4. Actionneur d'embrayage (4) d'un véhicule automobile selon l'une quelconque des revendications précédentes, dans lequel le corps d'actionneur (8) comprend une plaque de fixation (84) à un carter du groupe d'embrayage, configurée pour permettre la fixation directe de l'actionneur d'embrayage (4) audit groupe d'embrayage.

5. Actionneur d'embrayage (4) d'un véhicule à moteur selon l'une quelconque des revendications précédentes dans lequel l'actionneur d'embrayage (4) comprend une unité de commande (88) programmée pour commander les moyens moteurs (12) lors de l'actionnement du poussoir (16) et reliée de manière fonctionnelle au dispositif d'actionnement manuel.

6. Actionneur d'embrayage (4) d'un véhicule automobile selon la revendication 5, dans lequel l'unité de commande (88) est programmée pour recevoir une demande d'actionnement de type tout ou rien à partir de l'utilisateur via ladite commande d'actionnement, et pour moduler la vitesse et/ou le déplacement du poussoir (16) en fonction d'une règle d'actionnement pré-imposée.

7. Véhicule automobile comprenant un actionneur d'embrayage (4) selon l'une quelconque des revendications précédentes.
